# EUROPÄISCHE PATENTANMELDUNG

(11) **EP 4 530 042 A1**
(43) Veröffentlichungstag der Anmeldung: **02.04.2025**
(21) Anmeldenummer: 23199918.6
(22) Anmeldetag: 26.09.2023
(51) Int. Cl.: B29C 44/32, B29D 99/00, B29C 44/12

(54) **SANDWICHPANEEL UND VERFAHREN UND VORRICHTUNG ZUR HERSTELLUNG EINES SANDWICHPANEELS**

(71) Anmelder: Sika Technology AG, 6340 Baar (CH)
(72) Erfinder: GANSCHOW, Udo, 72574 Bad Urach (DE); SCHULZE, Johannes, 22767 Hamburg (DE)
(74) Vertreter: Sika Patent Attorneys

(57) **Zusammenfassung**

Die Erfindung betrifft ein Verfahren zur Herstellung eines Sandwichpaneels (10), insbesondere für Gebäude und/oder den Gütertransport, bei dem
- eine erste Deckschicht (11) des Sandwichpaneels (10) wenigstens einer Klebstoffaufbringeinrichtung (101) zur großflächigen Klebstoffaufbringung zugeführt wird, wobei die erste Deckschicht (11) einen in Zuführrichtung (ZR) verlaufenden Profilrand (12) mit wenigstens einem Hinterschnitt (13) aufweist;
- ein nicht-reaktiver Klebstoff (14) durch die Klebstoffaufbringeinrichtung (101) auf eine, insbesondere großflächige, Innenfläche (15) der ersten Deckschicht (11) aufgebracht wird; und
- der nicht-reaktive Klebstoff (14) durch wenigstens eine seitlich abstehende Düse (102) auf wenigstens eine an die Innenfläche (15) der ersten Deckschicht (11) angrenzende Hinterschnittfläche (16) des Profilrandes aufgebracht wird, wobei die Düse (102) zumindest teilweise in den Hinterschnitt ragt;
- auf den aufgebrachten nicht-reaktiven Klebstoff (14) wenigstens ein selbstexpandierendes Kunststoffmaterial (17), insbesondere eine schäumende Masse, aufgetragen wird;
- eine zweite Deckschicht (18) des Sandwichpaneels (10) von der ersten Deckschicht (11) derart beabstandet gegenüberliegend geführt wird, dass durch Expandieren des aufgetragenen Kunststoffmaterials (17) die beiden Deckschichten (11, 18) zur Bildung des Sandwichpaneels (10) miteinander verbunden werden.

## Beschreibung

Die Erfindung betrifft ein Verfahren und eine Vorrichtung zur Herstellung eines Sandwichpaneels sowie ein Sandwichpaneel.

Sandwichpaneele bestehend aus zwei gegenüberliegenden Deckschichten, häufig aus Metall, und einem dazwischenliegenden Schaumkern werden auf verschiedenste Weise hergestellt. Bei der Herstellung wird bspw. auf eine der beiden Deckschichten ein Klebstoff aufgebracht und anschließend eine selbstschäumende Masse aufgetragen, um einen harten Schaumkern zu bilden, der die beiden gegenüberliegenden Deckschichten miteinander verbindet. Als Klebstoff kann bspw. ein reaktiver Klebstoff, bspw. ein 2-Komponenten Polyurethan-Klebstoff oder Schmelzklebstoff verwendet werden.

Jene Deckschicht, die mit dem Schaumkern zusätzlich verklebt ist, wird vorzugsweise als Außenseite der Sandwichpaneele verwendet. Bei der Anwendung als Gebäudefassade, als Verkleidung für Fahrzeugaufbauten oder dergleichen ist diese außenseitige Anordnung von Vorteil, da Umwelteinflüsse, wie zum Beispiel Sonnenstrahlung, Regen, Hagel, etc. eine verstärkte Verbindung der Paneelschichten in diesem Abschnitt erfordern. Bei der Außenseite des Sandwichpaneels besteht daher ein erhöhtes Risiko der Blasenbildung durch abschnittsweises Ablösen der Deckschicht von dem Schaumkern. Dies kann insbesondere durch einen thermischen Schock erfolgen, der bspw. aus starken Temperaturschwankungen an der Deckschicht resultiert.

Das Problem der unerwünschten Blasenbildung betrifft im Besonderen die Verbindungsstellen der Paneele, durch die zwei benachbarte Sandwichpaneele miteinander verbindbar sind.

Der Erfindung liegt daher die Aufgabe zu Grunde, ein Verfahren zur Herstellung eines Sandwichpaneels anzugeben, bei dem das Risiko einer Blasenbildung, insbesondere im Bereich eines Profilrandes zur Verbindung zweier Sandwichpaneele, reduziert ist. Der Erfindung liegt ferner die Aufgabe zu Grunde, eine Vorrichtung zur Herstellung eines Sandwichpaneels und ein Sandwichpaneel anzugeben.

Erfindungsgemäß wird diese Aufgabe im Hinblick auf das Herstellungsverfahren durch den Gegenstand der Anspruchs 1 gelöst. Hinsichtlich der Vorrichtung und des Sandwichpaneels wird die vorstehend genannte Aufgabe jeweils durch den Gegenstand des Anspruchs 10 (Vorrichtung) und des Anspruchs 15 (Sandwichpaneel) gelöst.

Konkret wird die Aufgabe durch ein Verfahren zur Herstellung eines Sandwichpaneels, insbesondere für Gebäude und/oder den Gütertransport, gelöst, bei dem
- eine erste Deckschicht des Sandwichpaneels wenigstens einer Klebstoffaufbringeinrichtung zur großflächigen Klebstoffaufbringung zugeführt wird, wobei die erste Deckschicht einen in Zuführrichtung verlaufenden Profilrand mit wenigstens einem Hinterschnitt aufweist;
- ein nicht-reaktiver Klebstoff durch die Klebstoffaufbringeinrichtung auf eine, insbesondere großflächige, Innenfläche der ersten Deckschicht aufgebracht wird; und
- der nicht-reaktive Klebstoff durch wenigstens eine seitlich abstehende Düse auf wenigstens eine an die Innenfläche der ersten Deckschicht angrenzende Hinterschnittfläche des Profilrandes aufgebracht wird, wobei die Düse zumindest teilweise in den Hinterschnitt ragt;
- auf den aufgebrachten nicht-reaktiven Klebstoff wenigstens ein selbstexpandierendes Kunststoffmaterial, insbesondere eine schäumende Masse, aufgetragen wird;
- eine zweite Deckschicht des Sandwichpaneels von der ersten Deckschicht derart beabstandet gegenüberliegend geführt wird, dass durch Expandieren des aufgetragenen Kunststoffmaterials die beiden Deckschichten zur Bildung des Sandwichpaneels miteinander verbunden werden.

Das erfindungsgemäße Verfahren hat den wesentlichen Vorteil, dass der nicht-reaktive Klebstoff nicht nur auf die großflächige Innenfläche der ersten Deckschicht aufgetragen, sondern zusätzlich in den Hinterschnitt des Profilrandes der ersten Deckschicht eingebracht wird. Dadurch wird die an die Innenfläche angrenzende Fläche des Hinterschnitts, nämlich, die Hinterschnittfläche mit dem nicht-reaktiven Klebstoff versehen. Dies hat den großen Vorteil, dass das anschließend aufgebrachte selbstexpandierende Kunststoffmaterial im expandierten Zustand eine hochfeste Verbindung mit der ersten Deckschicht eingeht und das nicht nur im Bereich der großflächigen Innenfläche, sondern zusätzlich im Bereich des an die Innenfläche angrenzenden Hinterschnitts des Profilrandes. Im Kontext der hier beschriebenen Erfindung wirkt der Klebstoff demzufolge im Sinne eines "Primers", der eine Haftung der Profiloberfläche und einem eingebrachten Schaum vermittelt.

Das so hergestellte Sandwichpaneel weist somit eine erhöhte Widerstandsfähigkeit gegenüber Umwelteinflüssen, wie zum Beispiel Sonnenstrahlung, Regen, Hagel, etc. auf. Im Besonderen haben Versuche gezeigt, dass bei dem erfindungsgemäß hergestellten Sandwichpaneel das Risiko einer Blasenbildung durch abschnittsweises Ablösen der Hinterschnittfläche bzw. der Innenfläche der ersten Deckschicht von dem expandierten Kunststoffmaterial maßgeblich reduziert ist. Besonders resistent ist ein solches Sandwichpaneel gegenüber thermischen Schocks, die bspw. durch starke Temperaturschwankungen an der Deckschicht erfolgen können.

Besonders von Vorteil ist die Verwendung des nicht-reaktiven Klebstoffs, der durch seine verbesserten Fließeigenschaften einen Auftrag mittels einer bzw. der seitlich abstehenden Düse erlaubt. Im Unterschied dazu, haben reaktive Klebstoffe den Nachteil, dass diese aufgrund deren Zähflüssigkeit eine Düsenapplikation nicht ermöglichen, da die Düsenöffnung bzw. -Öffnungen verstopfen würden. Um dem entgegenzuwirken, müsste bspw. ein Schleuder-Sprühverfahren zur Anwendung kommen, das zu einem erhöhten Luft/Feuchtigkeitseintrag führt und dadurch ein Ablösen eines expandierten Schaumkerns begünstigt. Mit dem erfindungsgemäßen Verfahren wird dieser Effekt verhindert.

Im Gebrauch kommt vorzugsweise die erste Deckschicht als Außenseite des Sandwichpaneels zum Einsatz. Konkret weist die erste Deckschicht eine zumindest der Innenfläche gegenüberliegende Außenfläche, insbesondere Sichtfläche, auf. Die Außenfläche entspricht dabei vorteilhaft der Außenseite des Sandwichpaneels.

Beispielsweise wird das Sandwichpaneel zur Bildung einer Außenfassade von Gebäude und/oder zur Bildung von Wänden, Dächern, Böden bzw. Türen von Aufbauten, insbesondere Fahrzeugaufbauten, für den Gütertransport. Andere Anwendungen sind möglich. Die erste Deckschicht wird dabei als Außenseite verwendet, um bspw. den beschriebenen Umwelteinflüssen standzuhalten, ohne dass sich die Innenfläche bzw. die Hinterschnittfläche von dem expandierten Kunststoffmaterial löst.

Vorzugsweise ist das selbstexpandierende Kunststoffmaterial eine schäumbare bzw. selbstschäumende Masse. Im expandierten Zustand bildet das Kunststoffmaterial bevorzugt einen Schaumkern des Sandwichpaneels, der einerseits durch den nicht-reaktiven Klebstoff mit der ersten Deckschicht und dessen Profilrand verbunden ist und andererseits mit der zweiten gegenüberliegenden Deckschicht, insbesondere direkt, verbunden ist.

Der Profilrand der ersten Deckschicht verläuft bevorzugt parallel mit der Zuführrichtung. Die erste Deckschicht weist vorzugsweise an beiden Längsseiten einen Profilrand auf, die identisch oder unterschiedlich sein können. Der Hinterschnitt des Profilrandes ist bevorzugt zur Innenfläche der ersten Deckschicht offen ausgebildet. Mit anderen Worten ist der Hinterschnitt nach innen, d.h. zur Mitte der ersten Deckschicht, offen. Oder anders gesagt, ist der Hinterschnitt quer zur Zuführrichtung nach innen offen ausgebildet. Die Hinterschnittfläche grenzt an die Innenfläche an. Mit anderen Worten geht die Hinterschnittfläche in die Innenfläche der ersten Deckschicht, insbesondere im Wesentlichen versatzlos, über.

Der Profilrand dient zur Bildung einer Verbindungsstelle des Sandwichpaneels, nämlich, um zwei erfindungsgemäße hergestellte Sandwichpaneele miteinander, bevorzugt formschlüssig, zu verbinden. Dabei werden zwei benachbarte Sandwichpaneele über deren Verbindungsstellen aneinandergesteckt. Der Profilrand ist vorzugsweise so ausgestaltet, dass im verbundenen Zustand zweier Sandwichpaneele lediglich eine Schattenfuge von außen sichtbar ist. Man spricht daher auch von versteckten Verbindungsstellen ("Hidden Joints").

Vorteilhafte Ausführungsformen der Erfindung sind in den abhängigen Ansprüchen angegeben.

Bei einer bevorzugten Ausführungsform wird der nicht-reaktive Klebstoff in Zuführrichtung vor- und/oder nach der Klebstoffaufbringeinrichtung auf die Hinterschnittfläche aufgebracht. Mit anderen Worten kann der nicht-reaktive Klebstoff zuerst auf die Hinterschnittfläche und dann auf die großflächige Innenfläche der ersten Deckschicht aufgetragen oder zuerst auf die großflächige Innenfläche und dann auf die Hinterschnittfläche des Profilrandes aufgetragen werden. Dazu kann die seitlich abstehende Düse derart in Bezug auf die Klebstoffaufbringeinrichtung angeordnet sein, dass sie in Zuführrichtung vor oder nach der Klebstoffaufbringeinrichtung positioniert ist.

"Großflächig" bedeutet im Rahmen der Anmeldung, dass die Innenfläche größer als die Hinterschnittfläche ist. Konkret kann die Hinterschnittfläche ein flächiger Streifen sein, der in Längsrichtung des Profilrandes verläuft. Daran anschließend verläuft die Innenfläche der ersten Deckschicht, die größer als der flächige Streifen ist.

Bei einer weiteren bevorzugten Ausführungsform steht beim Auftragen des nicht-reaktiven Klebstoffs auf die Innenfläche der ersten Deckschicht die Klebstoffaufbringeinrichtung still. Zusätzlich oder alternativ steht beim Auftragen des nicht-reaktiven Klebstoffs auf die Hinterschnittfläche des Profilrandes die seitlich abstehende Düse still, wobei die erste Deckschicht in Zuführrichtung verläuft. Bei dieser Ausführungsform ist von Vorteil, dass lediglich die beiden Deckschichten in Zuführrichtung bewegt werden. Dabei läuft die erste Deckschicht bevorzugt unterhalb der Klebstoffaufbringeinrichtung und/oder der seitlich abstehenden Düse in Zuführrichtung vorbei, wobei der nicht-reaktive Klebstoff auf die Innenfläche bzw. Hinterschnittfläche vorzugsweise mittels Schwerkraft, aufgebracht wird. Dadurch ist die Komplexität der Herstellungsvorrichtung und somit Kosten reduziert. Hinzukommend ist dadurch ein gleichmäßiger Auftrag des Klebstoffs erleichtert.

Vorzugsweise wird der nicht-reaktive Klebstoff auf die Innenfläche der ersten Deckschicht und/oder auf die Hinterschnittfläche des Profilrandes mehrlinienförmig und/oder raupenförmig aufgetragen. Besonders vorteilhaft ist es, wenn der nicht-reaktive Klebstoff auf die Innenfläche und/oder die Hinterschnittfläche in nebeneinander verlaufenden Raupen appliziert wird. Die Raupen können in gleichmäßigen Abständen nebeneinander angeordnet werden. Mit anderen Worten kann der nicht-reaktive Klebstoff auf die Innenfläche und/oder die Hinterschnittfläche fadenförmig aufgetragen werden. Dadurch entsteht ein besonders guter und starker Verbund, da der Kontakt von Klebstoff und dem expandiertem Kunststoffmaterial, insbesondere Schaumkern, möglichst gleichmäßig und flächig erfolgt. Daraus resultiert eine vergrößerte Haftoberfläche.

Der Profilrand umfasst vorzugsweise wenigstens einen an die Hinterschnittfläche angrenzenden Schmalbereich, der durch die seitlich abstehende Düse und/oder eine weitere Düse mit dem nicht-reaktiven Klebstoff zumindest abschnittsweise ausgefüllt wird. Der in den Schmalbereich eingebrachte nicht-reaktive Klebstoff wird vorzugsweise geschäumt bzw. ist schäumbar, insbesondere selbstschäumbar. Besonders bevorzugt ist der auf die Hinterschnittfläche aufgetragene und der in den Schmalbereich gefüllte nicht-reaktive Klebstoff derselbe. Der Schmalbereich kann eine in Längsrichtung der ersten Deckschicht verlaufende Profilnase des Profilrandes sein, die zur Hinterschnittfläche offen ist.

Es ist von Vorteil, wenn der Schmalbereich unabhängig von dem Auftrag des selbstexpandierenden Kunststoffmaterials zur Bildung einer Paneelkernschicht mit einem schäumbaren Klebstoff, insbesondere dem geschäumten nicht-reaktiven Klebstoff ausgefüllt wird. Dies kann vor oder nach dem Auftragen des nicht-reaktiven Klebstoffs auf die Hinterschnittfläche erfolgen. Dazu kann eine separate Düse vorgesehen sein, die, insbesondere ausschließlich dazu dient, den Schmalbereich auszufüllen. Dies hat den Vorteil, dass eine exakte Trennung von Ausfüllen und Klebstoffauftrag vorliegt und somit ein unerwünschtes Vermischen des in den Schmalbereich eingetragenen Materials und des aufgetragenen nicht-reaktiven Klebstoffs verhindert wird.

Alternativ ist es möglich, dass das Ausfüllen des Schmalbereichs durch die seitlich abstehende Düse erfolgt. Vorteilhaft wird, wie bei der vorstehend beschriebenen Zweidüsenkombination, das Ausfüllen des Schmalbereichs und der Auftrag des nicht-reaktiven Klebstoffs auf die Hinterschnittfläche zeitlich getrennt durchgeführt.

Es ist möglich, in den Schmalbereich eine vorgefertigte Dichtung einzubringen. Dies kann vorzugsweise alternativ oder zusätzlich zum Einbringen des geschäumten Klebstoffs erfolgen. Das Einbringen der Dichtung in den Schmalbereich erfolgt vorzugsweise durch wenigstens ein Einpressrad. Andere Einbringvorrichtungen für die Dichtung sind möglich.

Die Klebstoffaufbringeinrichtung und die seitlich abstehende Düse können unterschiedliche Klebstoffversorgungen nutzen (so dass der großflächig aufgebrachte Klebstoff von dem in den Hinterschnitt eingebrachten Klebstoff verschieden sein kann), oder es kann dieselbe Klebstoffversorgung genutzt werden. Bevorzugt nutzen die Klebstoffaufbringeinrichtung und die seitlich abstehende Düse ein und dieselbe Klebstoffversorgung. Beispielsweise kann die Klebstoffaufbringeinrichtung und die seitlich abstehende Düse derselben Pumpe und demselben Klebstofftank verbunden sein. Vorteilhaft ist es, wenn zusätzlich die Klebstoffaufbringeinrichtung und die seitlich abstehende Düse von derselben Steuerung gesteuert werden. Bei dieser Ausführungsform ist vorteilhaft, dass die seitlich abstehende Düse in ein bereits bestehendes Versorgungssystem integriert ist und somit Kosten eingespart werden.

Besonders vorteilhaft ist, wenn auf die Innenfläche der ersten Deckschicht und/oder auf die Hinterschnittfläche des Profilrandes ausschließlich nicht-reaktiver Klebstoff aufgetragen wird. Dabei handelt es sich um denselben nicht-reaktiven Klebstoff. Zur Anwendung kommt somit kein reaktiver Klebstoff, der aufgrund seiner Fließeigenschaften eine aufwändige Applikation mit sich bringt.

Bevorzugt wird als nicht-reaktiver Klebstoff wenigstens ein Schmelzklebstoff verwendet, der insbesondere nach dem Hotmelt-Verfahren, aufgetragen wird. Der Schmelzklebstoff umfasst vorzugsweise:
a. als ersten Bestandteil mindestens ein Styrol-Blockcopolymer SC, insbesondere mit einem Anteil von mindestens 5 Gew.-%, vorzugsweise mindestens 15 Gew.-%, und weiter bevorzugt mindestens 20 Gew.-%;
b. als zweiten Bestandteil mindestens ein klebrigmachendes Kohlenwasserstoffharz TR, insbesondere mit einem Anteil von 15 - 55 Gew.-%, bevorzugt 20 - 50 Gew.-%,
c. mindestens einen Weichmacher PL, ausgewählt aus Prozessölen und flüssigen Kohlenwasserstoffharzen.

Die Gewichtsangaben beziehen sich jeweils auf das Gesamtgewicht des Schmelzklebstoffs.

Mit anderen Worten wird der nicht-reaktive Klebstoff mittels Hotmelt-Verfahren (allgemein bekannt) auf die Innenfläche der ersten Deckschicht und/oder die Hinterschnittfläche des Profilrandes aufgetragen.

Bei Versuchen wurde festgestellt, dass bei einer ersten Deckschicht aus Aluminium und einem Klebstoff mit dieser Zusammensetzung eine besonders hochfeste Verbindung entsteht. Bei den Versuchen wurde einerseits ein erstes Muster-Sandwichpaneel ohne auf die Hinterschnittfläche applizierten Klebstoff hergestellt. Anschließend wurde die erste Deckschicht aus Aluminium von der expandierten Kernschicht abgerissen. Es stellt sich heraus, dass sich die Kernschicht, von der Aluminiuminnenfläche löste (adhäsiver Bruch). Zur Gegenüberstellung wurde zusätzlich ein zweitens Muster-Sandwichpaneel mit auf die Hinterschnittfläche aufgetragenem Klebstoff hergestellt und die erste Deckschicht, ebenso wie bei dem ersten Muster-Sandwichpaneel, von der Kernschicht abgerissen. Dabei ergab sich vorteilhaft ein kohäsives Bruchbild.

Gemäß der vorgenannten Ausführungsform umfasst der Schmelzklebstoff als ersten Bestandteil mindestens ein Styrol-Blockcopolymer SC. Der erste Bestandteil des Styrol-Blockcopolymers SC kann bspw. 5 - 45 Gew.-%, vorzugsweise 15 - 45 Gew.-%, weiter bevorzugt 20 - 40 Gew.-%, des Gesamtgewichts des Schmelzklebstoffs ausmachen. Geeignete Styrolblockcopolymere sind insbesondere Blockcopolymere, die Polystyrol- und Polybutadienblöcke und/oder Polyisoprenblöcke enthalten. Solche StyrolBlockcopolymere können eine lineare, radiale oder sternförmige Struktur aufweisen, wobei die lineare Struktur besonders bevorzugt ist.

Gemäß einer Ausführungsform umfasst das mindestens eine Styrol-Blockcopolymer SC mindestens ein Styrol-Isopren-Diblock- (SI) und/oder Triblock-Copolymer (SIS) und/oder mindestens ein Styrol-Butadien-Diblock- (SB) und/oder Triblock-Copolymer (SBS).

Wie vorstehend beschrieben, umfasst der Schmelzklebstoff vorzugsweise als zweiten Bestandteil mindestens ein klebrigmachendes Harz TR.

Der Begriff "klebrigmachendes Harz" betrifft im Rahmen der Anmeldung Harze, die im Allgemeinen die Adhäsion und/oder Klebrigkeit einer Klebstoffzusammensetzung verbessern. Der Begriff "Klebrigkeit" betrifft im Rahmen der Anmeldung die Eigenschaft eines Stoffes, durch einfachen Kontakt klebrig oder adhäsiv zu sein. Die Klebrigkeit kann z. B. als Schleifenhaftung gemessen werden. Bevorzugte klebrig machende Harze sind bei einer Temperatur von 25°C klebrig. Beispiele für geeignete klebrigmachende Harze sind Naturharze, Kunstharze und chemisch modifizierte Naturharze.

Beispiele für Naturharze und chemisch modifizierte Naturharze sind Kolophonium, Kolophoniumester, phenolisch modifizierte Kolophoniumester und Terpenharze. Unter dem Begriff "Kolophonium" sind Gummikolophonium, Holzkolophonium, Tallölkolophonium, destilliertes Kolophonium und modifizierte Kolophoniumharze zu verstehen, z. B. dimerisierte, hydrierte, maleierte und/oder polymerisierte Versionen dieser Harze.

Zu den geeigneten Terpenharzen gehören Copolymere und Terpolymere natürlicher Terpene, wie Styrol/Terpen- und Alpha-Methylstyrol/Terpen-Harze; Polyterpenharze, die im Allgemeinen aus der Polymerisation von Terpenkohlenwasserstoffen, wie dem als Pinen bekannten bicyclischen Monoterpen, in Gegenwart von Friedel-Crafts-Katalysatoren bei mäßig niedrigen Temperaturen resultieren, hydrierte Polyterpenharze und phenolisch modifizierte Terpenharze, einschließlich hydrierter Derivate davon.

Der Begriff "Kunstharz" betrifft Verbindungen, die durch kontrollierte chemische Reaktionen wie Polyaddition oder Polykondensation zwischen genau definierten Reaktanten erhalten werden, die selbst nicht die Eigenschaften von Harzen aufweisen.

Zu den Monomeren, die zur Synthese der Kunstharze polymerisiert werden können, gehören aliphatische Monomere, cycloaliphatische Monomere, aromatische Monomere oder Mischungen davon. Zu den aliphatischen Monomeren können C4-, C5- und C6-Paraffine, Olefine und konjugierte Diolefine gehören. Beispiele für aliphatische Monomere oder cycloaliphatische Monomere sind Butadien, Isobutylen, 1,3-Pentadien, 1,4-Pentadien, Cyclopentan, 1-Penten, 2-Penten, 2-Methyl-1-Penten, 2-Methyl-2-Buten, 2-Methyl-2-Penten, Isopren, Cyclohexan, 1-3-Hexadien, 1-4-Hexadien, Cyclopentadien, Dicyclopentadien und Terpene. Aromatische Monomere können C8-, C9- und C10-aromatische Monomere umfassen. Beispiele für aromatische Monomere sind Styrol, Inden, Derivate von Styrol, Derivate von Inden, Cumaron und Kombinationen davon. Zu den besonders geeigneten Kunstharzen gehören Kunstharze, die durch Polymerisation von Mischungen ungesättigter Monomere hergestellt werden, die als Nebenprodukte beim Cracken von Erdgasflüssigkeiten, Gasöl oder Erdölnaphthen anfallen. Solche Kunstharze, die aus Rohstoffen auf Erdölbasis gewonnen werden, werden auch als "Erdölharze" oder "Kohlenwasserstoffharze" bezeichnet. Dazu gehören auch rein monomere aromatische Harze, die durch Polymerisation aromatischer monomerer Ausgangsstoffe hergestellt werden, die gereinigt wurden, um farbverursachende Verunreinigungen zu entfernen und die Zusammensetzung des Produkts genau zu kontrollieren. Klebrigmachende Kohlenwasserstoffharze haben in der Regel ein relativ niedriges durchschnittliches Molekulargewicht (Mₙ), z. B. im Bereich von 250 - 5000 g/mol, und eine Glasübergangstemperatur von über 0 °C, vorzugsweise gleich oder höher als 15 °C, noch bevorzugter gleich oder höher als 30 °C.

Beispiele für Kohlenwasserstoffharze zur Verwendung als klebrigmachendes Harz TR sind z. B. aliphatische C5-Kohlenwasserstoffharze, gemischte aliphatische/aromatische C5/C9-Kohlenwasserstoffharze, aromatisch modifizierte aliphatische C5-Kohlenwasserstoffharze, cycloaliphatische Kohlenwasserstoffharze, gemischte aliphatische/cycloaliphatische C5-Kohlenwasserstoffharze, gemischte C9-aromatische/cycloaliphatische Kohlenwasserstoffharze, gemischte C5-aliphatische/cycloaliphatische/C9-aromatische Kohlenwasserstoffharze, aromatisch modifizierte cycloaliphatische Kohlenwasserstoffharze, C9-aromatische Kohlenwasserstoffharze, Polyterpenharze und Copolymere und Terpolymere natürlicher Terpene sowie hydrierte Versionen der vorgenannten Kohlenwasserstoffharze. Die Bezeichnungen "C5" und "C9" bedeuten, dass die Monomere, aus denen die Harze hergestellt werden, überwiegend Kohlenwasserstoffe mit 4-6 bzw. 8-10 Kohlenstoffatomen sind. Der Begriff "hydriert" umfasst vollständig, im Wesentlichen und zumindest teilweise hydrierte Harze. Teilweise hydrierte Harze können z. B. einen Hydrierungsgrad von 50 %, 70 % oder 90 % aufweisen.

Vorzugsweise ist das mindestens eine klebrigmachende Harz TR ein nichtfunktionalisiertes klebrigmachendes Harz. Der Begriff "nicht funktionalisiertes klebrigmachendes Harz" bedeutet klebrigmachende Harze, die nicht chemisch modifiziert sind, so dass sie funktionelle Gruppen wie Epoxid-, Silan-, Sulfonat-, Amid- oder Anhydridgruppen enthalten.

Das mindestens eine klebrigmachende Harz TR des Schmelzklebstoffs umfasst bevorzugt:
- einen Erweichungspunkt, gemessen nach der Ring- und Kugelmethode gemäß der Norm DIN EN 1238:2011, im Bereich von 65 - 175 °C, vorzugsweise 70 - 145 °C, besonders bevorzugt 75 - 115 °C, noch bevorzugter 80 - 125 °C; und/oder
- ein gemitteltes Molekulargewicht (Mₙ) im Bereich von 150 - 5000 g/mol, vorzugsweise 250 - 3500 g/mol, besonders bevorzugt 250 - 3000 g/mol, noch bevorzugter 250 - 2500 g/mol; und/oder
- eine Glasübergangstemperatur (T_{g}), bestimmt durch dynamisch-mechanische Analyse (DMA) als der Peak der gemessenen Verlustmodul-(G")-Kurve unter Verwendung einer angelegten Frequenz von 1 Hz und eines Dehnungsniveaus von 0,1 % bei oder über 0 °C, vorzugsweise bei oder über 10 °C, weiter bevorzugt bei oder über 15 °C, noch weiter bevorzugt bei oder über 20 °C.

Zusätzlich umfasst der Schmelzklebstoff vorzugsweise mindestens einen Weichmacher PL, der aus Prozessölen und flüssigen Kohlenwasserstoffharzen ausgewählt ist, wobei Polyolefinharzen als Kohlenwasserstoffharzweichmacher bevorzugt sind. Bevorzugt sind das mindestens eine Kohlenwasserstoffharz des Weichmachers PL von jenem des zweiten Bestandteils des Schmelzklebstoffs verschieden in der Weise, dass eine unterschiedliche chemische Zusammensetzung aufweisen, oder dass sie sich zumindest in ihrem mittleren Molekulargewicht (Mn, bestimmt in der Regel durch GPC unter Verwendung geeigneter Standards) unterscheiden. Beispielsweise ist es möglich, dass das klebrigmachende Kohlenwasserstoffharz und das Kohlenwasserstoffharz, das als Weichmacher verwendet wird, auf C5-Kohlenwasserstoffen beruhen, wobei der Weichmacher in diesem Fall ein geringeres geringes Molekulargewicht aufweist (um so eine weichmachende Wirkung zu vermitteln), während das klebrigmachende Harz ein höheres Molekulargewicht aufweist, und so in erster Linie in dieser Funktion wirkt. In einer Zusammensetzung können solche Kombinationen dadurch von einer Zusammensetzung mit nur einer C-5 Harzkomponente unterschieden werden, dass die Molekulargewichtsverteilung zwei Maxima aufweist.

Der Begriff "Mineralöl" betrifft im Rahmen der Anmeldung flüssige Kohlenwasserstoffe mit Schmierviskosität (d. h. einer kinematischen Viskosität bei 100 °C von 1 cSt oder mehr), die aus Erdöl gewonnen und einem oder mehreren Raffinations- und/oder Hydroprocessing-Schritten unterzogen werden, wie z. B. Fraktionierung, Hydrocracking, Entparaffinierung, Isomerisierung und Hydrofinishing, um die Komponenten zu reinigen und chemisch zu modifizieren, um eine Reihe von Endeigenschaften zu erreichen. Mit anderen Worten betrifft der Begriff "Mineral" im Rahmen der Anmeldung raffinierte Mineralöle, die auch als Grundöle der Gruppen I-III gemäß der Klassifizierung des American Petroleum Institute (API) bezeichnet werden können.

Mineralöle, die als der mindestens einen Weichmacher PL im Schmelzklebstoff verwendet werden, sind vorzugsweise paraffinische, naphthenische und aromatische Mineralöle. Besonders vorteilhaft ist, wenn die Mineralöle paraffinische und naphtenische Öle sind, die relativ geringe Mengen an aromatischen Bestandteilen enthalten, beispielsweise nicht mehr als 25 Gew.-%, vorzugsweise nicht mehr als 15 Gew.-%, bezogen auf das Gesamtgewicht des Mineralöls.

Der Begriff "synthetisches Öl" bezieht sich im Rahmen der Anmeldung auf vollsynthetische (Polyalphaolefin-)Öle, die nach der Klassifizierung des American Petroleum Institute (API) auch als Grundöle der Gruppe IV bezeichnet werden. Geeignete synthetische Öle werden aus flüssigen Polyalphaolefinen (PAOs) hergestellt, die durch Polymerisation von α-Olefinen in Gegenwart eines Polymerisationskatalysators, wie z. B. eines Friedel-Crafts-Katalysators, gewonnen werden. Im Allgemeinen handelt es sich bei flüssigen PAOs um hochreine Kohlenwasserstoffe mit einer paraffinischen Struktur und einem hohen Grad an Seitenkettenverzweigung. Besonders geeignet sind synthetische Öle, die aus sogenannten Gas-To-Liquids-Verfahren gewonnen werden.

Der Begriff "flüssiges Polyolefinharz" bezieht sich im Rahmen der Anmeldung auf ein Polyolefinharz, das bei normaler Raumtemperatur fließt, d. h. einen Stockpunkt von weniger als 20 °C hat.

Geeignete flüssige Polyolefinharze, die für den Schmelzklebstoff als mindestens ein Weichmacher PL verwendet werden können, sind beispielsweise flüssiges Polybuten und flüssiges Polyisobutylen (PIB). Der Begriff "flüssiges Polybuten" bezieht sich in der vorliegenden Offenbarung auf Olefin-Oligomere mit niedrigem Molekulargewicht, die Isobutylen und/oder 1-Buten und/oder 2-Buten enthalten. Das Verhältnis der C4-Olefin-Isomere kann je nach Hersteller und Qualität variieren. Handelt es sich bei dem C4-Olefin ausschließlich um 1-Buten, wird das Material als "Poly-n-Buten" oder "PNB" bezeichnet. Der Begriff "flüssiges Polyisobutylen" bezieht sich im vorliegenden Dokument auf Olefin-Oligomere des Isobutylens mit niedrigem Molekulargewicht, die vorzugsweise mindestens 75 Gew.-%, vorzugsweise mindestens 85 Gew.-%, von Isobutylen abgeleitete Wiederholungseinheiten enthalten. Geeignete flüssige Polybutene und Polyisobutylene haben ein zahlenmittleres Molekulargewicht (Mn) von weniger als 5000 g/mol, vorzugsweise weniger als 3500 g/mol, stärker bevorzugt weniger als 3000 g/mol, noch stärker bevorzugt weniger als 2500 g/mol.

Besonders vorteilhaft ist die Verwendung von folgenden flüssigen Polybutenen und flüssigen Polyisobutylenen, umfassend:
- ein mittleres Molekulargewicht (Mₙ) von 150 - 3500 g/mol, vorzugsweise 250 - 3000 g/mol, besonders bevorzugt 350 - 2500 g/mol; und/oder
- einen Stockpunkt, bestimmt nach ISO 3016, im Bereich von -10 bis +15 °C, vorzugsweise von -10 bis +10 °C; und/oder
- einen Polydispersitätsindex (M_{w}/Mₙ), bestimmt durch GPC, von höchstens 5, vorzugsweise im Bereich von 0,5 - 5,0, mehr bevorzugt 1,0 - 4,5, noch mehr bevorzugt 1,0 - 3,5.

Der mindestens eine Weichmacher PL beträgt vorzugsweise 0,5 - 15 Gew.-%, bevorzugt 1,5 - 12,5 Gew.-%, besonders bevorzugt 2,5 - 10 Gew.-% des Gesamtgewichts der Masse des Schmelzklebstoffs.

Thermoplastische Harze TP die bevorzugt in dem Schmelzklebstoff verwendet werden, können umfassen:
- einen Erweichungspunkt, gemessen nach der Ring- und Kugelmethode gemäß der Norm DIN EN 1238:2011, im Bereich von 125 - 250 °C, bevorzugt 130 - 225 °C, noch bevorzugter 135 - 200 °C, noch bevorzugter 140 - 185 °C; und/oder
- ein gemitteltes Molekulargewicht (Mₙ) im Bereich von 150 - 5000 g/mol, vorzugsweise 500 - 4500 g/mol, mehr bevorzugt 1000 - 3500 g/mol, noch mehr bevorzugt 1500 - 3500 g/mol und/oder
- eine Glasübergangstemperatur (T_{g}), die durch dynamisch-mechanische Analyse (DMA) als Spitzenwert der gemessenen Verlustmodulkurve (G") unter Verwendung einer angelegten Frequenz von 1 Hz und eines Dehnungsniveaus von 0,1 % bestimmt wird, bei oder über 35 °C, vorzugsweise bei oder über 50 °C, weiter bevorzugt bei oder über 65 °C, noch weiter bevorzugt bei oder über 75 °C.

Zusätzlich kann der Schmelzklebstoff weitere Hilfs- und Zusatzstoffe enthalten, zum Beispiel solche aus der Gruppe der UV-Absorptionsmittel, UV- und Wärmestabilisatoren, optischen Aufheller, Antioxidantien, Pigmente, Farbstoffe und Trocknungsmittel. Beispielhafte UV-Stabilisatoren, die in der Schmelzklebstoffzusammensetzung enthalten sein können, sind zum Beispiel sterisch gehinderte Phenole. Die Gesamtmenge dieser zusätzlichen Hilfs- und Zusatzstoffe beträgt vorzugsweise maximal 15 Gew.-%, vorzugsweise maximal 10 Gew.-%, besonders bevorzugt maximal 5 Gew.-% des Gesamtgewichts des Schmelzklebstoffs.

Das Präfix "Poly" in Stoffbezeichnungen wie "Polyol" oder "Polyisocyanat" bezieht sich bevorzugt auf Stoffe, die formal gesehen zwei oder mehr der in ihrer Bezeichnung vorkommenden funktionellen Gruppe pro Molekül enthalten. Ein Polyol ist zum Beispiel eine Verbindung mit zwei oder mehr Hydroxylgruppen, ein Polyisocyanat eine Verbindung mit zwei oder mehr Isocyanatgruppen.

Der Begriff "Polymer" bezeichnet im Wesentlichen ein Kollektiv chemisch einheitlicher Makromoleküle, die durch eine Polyreaktion (Polymerisation, Polyaddition, Polykondensation) hergestellt werden, wobei sich die Makromoleküle in Bezug auf ihren Polymerisationsgrad, ihr Molekulargewicht und ihre Kettenlänge unterscheiden. Der Begriff "Polymer" umfasst auch Derivate dieses Kollektivs von Makromolekülen, die aus Polyreaktionen hervorgehen, d. h. Verbindungen, die durch Reaktionen wie zum Beispiel Additionen oder Substitutionen von funktionellen Gruppen in vorbestimmten Makromolekülen erhalten werden und die chemisch einheitlich oder chemisch uneinheitlich sein können.

Der Begriff "Molekulargewicht" bezieht sich auf die molare Masse (g/mol) eines Moleküls oder eines Teils eines Moleküls, auch als "Teil" bezeichnet. Der Begriff "durchschnittliches Molekulargewicht" bezieht sich auf das Zahlenmittel des Molekulargewichts (Mₙ) oder das Gewichtsmittel des Molekulargewichts (M_{w}) einer oligomeren oder polymeren Mischung von Molekülen oder Teilen. Das Molekulargewicht kann mit herkömmlichen Methoden bestimmt werden, vorzugsweise durch Gelpermeationschromatographie (GPC) unter Verwendung von Polystyrol als Standard, Styrol-Divinylbenzol-Gel mit einer Porosität von 100 Angström, 1000 Angström und 10000 Angström als Säule und je nach Molekül Tetrahydrofuran als Lösungsmittel bei 35°C oder 1,2,4-Trichlorbenzol als Lösungsmittel bei 160°C.

Der Begriff "Erweichungspunkt" oder "Erweichungstemperatur" bezieht sich auf die Temperatur, bei der die Mischung in einem gummiartigen Zustand erweicht, oder auf die Temperatur, bei der der kristalline Anteil innerhalb der Mischung schmilzt. Der Erweichungspunkt kann nach der Ring- und Kugelmethode gemäß der Norm DIN EN 1238:2011 gemessen werden.

Der Begriff "Glasübergangstemperatur" (T_{g}) bezieht sich auf die Temperatur, oberhalb derer eine Polymerkomponente weich und biegsam wird und unterhalb derer sie hart und glasartig wird. Die Glasübergangstemperatur (Tg) wird vorzugsweise durch dynamisch-mechanische Analyse (DMA) als Spitzenwert der gemessenen Verlustmodulkurve (G") bei einer angelegten Frequenz von 1 Hz und einem Dehnungsniveau von 0,1 % bestimmt.

Nach einem nebengeordneten Aspekt betrifft die Erfindung eine Vorrichtung zur Herstellung eines Sandwichpaneels, insbesondere für Gebäude und/oder den Gütertransport, wobei die Vorrichtung Folgendes umfasst:
- wenigstens eine erste Zuführ- und Transporteinrichtung, die in einer Längsrichtung der Vorrichtung verläuft und dazu angepasst ist, eine erste Deckschicht des Sandwichpaneels zuzuführen und zu transportieren;
- wenigstens eine Klebstoffaufbringeinrichtung zur großflächigen Klebstoffaufbringung, die dazu angepasst ist, einen nicht-reaktiven Klebstoff, insbesondere Schmelzklebstoff, auf die Innenfläche der ersten Deckschicht des Sandwichpaneels aufzubringen, wobei die Zuführ- und Transporteinrichtung unterhalb der Klebstoffaufbringeinrichtung in Vorrichtungslängsrichtung verläuft;
- wenigstens eine seitlich abstehende Düse, die im Wesentlichen quer zur Längsrichtung der Vorrichtung verlaufend ausgerichtet ist und dazu angepasst ist, den nicht-reaktiven Klebstoff auf wenigstens eine an die Innenfläche der ersten Deckschicht angrenzende Hinterschnittfläche eines Profilrandes der ersten Deckschicht aufzubringen;
- wenigstens eine nachgeschaltete Einrichtung zum Auftragen eines selbstexpandierenden Kunststoffmaterials, insbesondere einer schäumenden Masse;
- wenigstens eine zweite Zuführ- und Transporteinrichtung, die dazu angepasst ist, eine zweite Deckschicht des Sandwichpaneels von der ersten Deckschicht beabstandet gegenüberliegend derart zuführen, dass sich durch Expandieren des aufgetragenen Kunststoffmaterials die beiden Deckschichten zur Bildung des Sandwichpaneels miteinander verbinden.

Die im Zusammenhang mit dem Verfahren genannten Vorteile gelten in entsprechender Weise auch für die erfindungsgemäße Vorrichtung. Die im Zusammenhang mit dem Verfahren beschriebenen Verfahrensschritte werden auch im Zusammenhang mit der Vorrichtung offenbart und zwar in der Form, dass die Vorrichtung dazu konfiguriert bzw. angepasst ist, diese Verfahrensschritte durchzuführen. Generell ist somit die Vorrichtung dazu geeignet das erfindungsgemäße Verfahren auszuführen.

Bei einer bevorzugten Ausführungsform der erfindungsgemäßen Vorrichtung steht die wenigstens eine seitlich abstehende Düse quer zur Zuführrichtung über die Klebstoffaufbringeinrichtung seitlich vor. Dadurch ist es möglich, dass die Klebstoffaufbringeinrichtung innerhalb des Profilrandes angeordnet ist und die seitlich abstehende Düse in den Hinterschnitt eingreift. Ein Hin- und Herbewegung wird dadurch verhindert.

Es ist möglich, dass wenigstens zwei seitlich abstehende Düsen vorgesehen sind, die quer zur Zuführrichtung über die Klebstoffaufbringeinrichtung seitlich, d.h. beidseitig, vorstehen. Die seitlich abstehende Düse ist vorzugsweise länglich. Bevorzugt ist die seitlich abstehende Düse flach, um in den Hinterschnitt einzugreifen.

Bei eine weiteren bevorzugten Ausführungsform der erfindungsgemäßen Vorrichtung umfasst die seitlich abstehende Düse wenigstens eine stirnseitige Düsenöffnung zum Ausfüllen eines an die Hinterschnittfläche angrenzenden Schmalbereichs des Profilrandes. Zusätzlich oder alternativ umfasst die seitlich vorstehende Düse vorzugsweise wenigstens eine unterseitige Düsenöffnung, insbesondere mehrere solche Düsenöffnungen, zum mehrlinienförmigen Auftragen des nicht-reaktiven Klebstoffs auf die Hinterschnittfläche. Die Düse kann somit vorteilhaft mehrere Aufgaben erfüllen, was Zeit und Kosten spart.

Es kann wenigstens eine weitere Düse der seitlich abstehenden Düse vorgeschaltet sein, die dazu angepasst ist, einen an die Hinterschnittfläche angrenzenden Schmalbereich des Profilrandes mit einem schäumbaren Klebstoff und/oder dem nicht-reaktiven Klebstoff zumindest abschnittsweise auszufüllen.

Bevorzugt erstrecken sich die Klebstoffaufbringeinrichtung und/oder die Einrichtung zum Auftragen eines selbstexpandierenden Kunststoffmaterials quer zur Vorrichtungslängsrichtung, insbesondere über die gesamte Breite der Innenfläche der ersten Deckschicht. Bevorzugt ist die erste Deckschicht eine Bahn, insbesondere Aluminiumbahn, wobei sich im Betrieb die Klebstoffaufbringeinrichtung bzw. die Einreichung zum Auftragen des expandierbaren Kunststoffmaterials über die Breite der Bahn erstrecken. Dadurch wird der Auftrag des nicht-reaktiven Klebstoffs und des expandierbaren Kunststoffmaterials zur Bildung der Kernschicht über die gesamte Breite der Innenfläche der ersten Deckschicht realisiert.

Nach einem weiteren nebengeordneten Aspekt betrifft die Erfindung ein Sandwichpaneel für ein Gebäude und/oder den Gütertransport, mit einer ersten und einer zweiten Deckschicht, die einander beabstandet gegenüber angeordnet sind und einen dazwischenliegenden Zwischenraum begrenzen, der durch einen Schaumkern ausgefüllt ist, wobei auf einer Innenfläche der ersten Deckschicht und auf einer an die Innenfläche angrenzende Hinterschnittfläche eines Profilrandes der ersten Deckschicht wenigstens ein nicht-reaktiver Klebstoff, insbesondere Schmelzklebstoff, aufgetragen ist, der den Schaumkern mit der ersten Deckschicht stoffschlüssig verbindet.

Die beiden Deckschichten sind bevorzugt aus Metall, insbesondere aus beschichteten und unbeschichteten metallischen und nichtmetallischen Werkstoffen, gebildet. Ein bevorzugter metallischer Wirkstoff ist hierbei Aluminium. Vorzugsweise ist das Sandwichpaneel durch ein erfindungsgemäßes Verfahren und/oder mit einer erfindungsgemäßen Vorrichtung hergestellt ist. Die Erfindung wird nachstehend mit weiteren Einzelheiten unter Bezug auf die beigefügten Zeichnungen näher erläutert. Die dargestellten Ausführungsformen stellt ein Beispiel dar, wie die erfindungsgemäße Vorrichtung bzw. das erfindungsgemäße Sandwichpaneel ausgestaltet sein können. Ferner wird anhand der beigefügten Zeichnungen das erfindungsgemäße Verfahren zur Herstellung eines Sandwichpaneels beschrieben.

In diesen zeigen,
- Fig. 1: eine schematische Darstellung einer Vorrichtung zur Herstellung eines Sandwichpaneels nach einem erfindungsgemäßen Ausführungsbeispiel;
- Fig. 2: einen schematischen Aufbau der Vorrichtung nach Fig. 1;
- Fig. 3: einen Querschnitt durch ein Sandwichpaneel nach einem erfindungsgemäßen Ausführungsbeispiel, im Bereich eines Profilrandes des Sandwichpaneels;
- Fig. 4: ein Ausschnitt eines Querschnitts des Sandwichpaneels gemäß Fig. 3 mit exemplarisch ausgefülltem Schmalbereich des Profilrandes;
- Fig. 5: eine Draufsicht auf ein Auftragmuster des nicht-reaktiven Klebstoffs, wie es auf der Hinterschnittfläche des Profilrandes vorgesehen wird; und
- Fig. 6: eine Klebstoffaufbringungseinrichtung der Vorrichtung gemäß Fig. 1 zur großflächigen Klebstoffaufbringung auf eine erste Deckschicht des Sandwichpaneels.

In der folgenden Beschreibung werden für gleiche und gleichwirkende Teile dieselben Bezugsziffern verwendet.

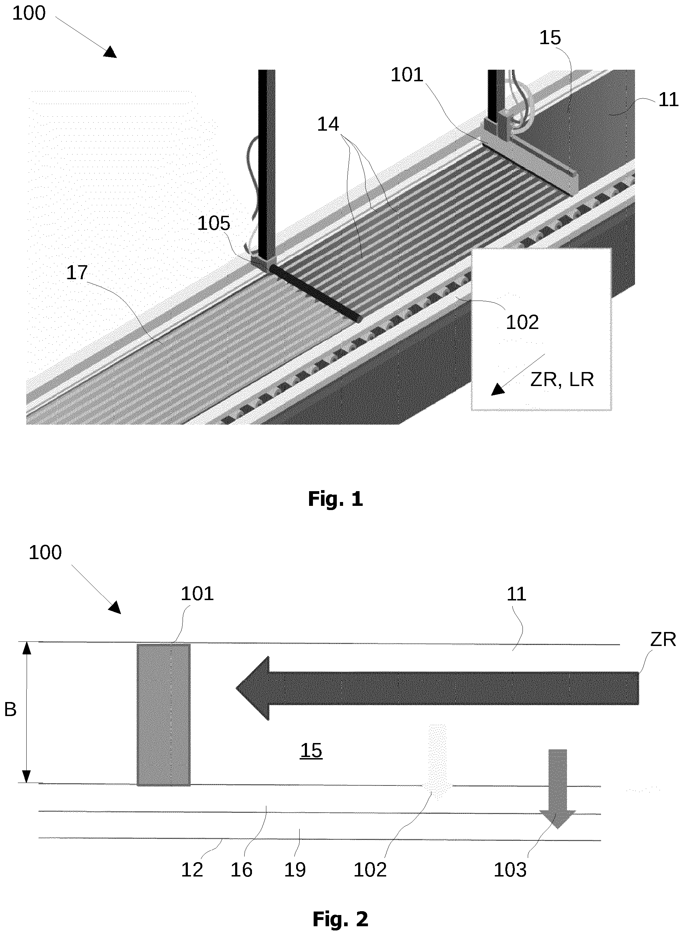

Fig. 1 zeigt schematisch eine Vorrichtung 100 zur Herstellung eines Sandwichpaneels 10 nach einem erfindungsgemäßen Ausführungsbeispiel.

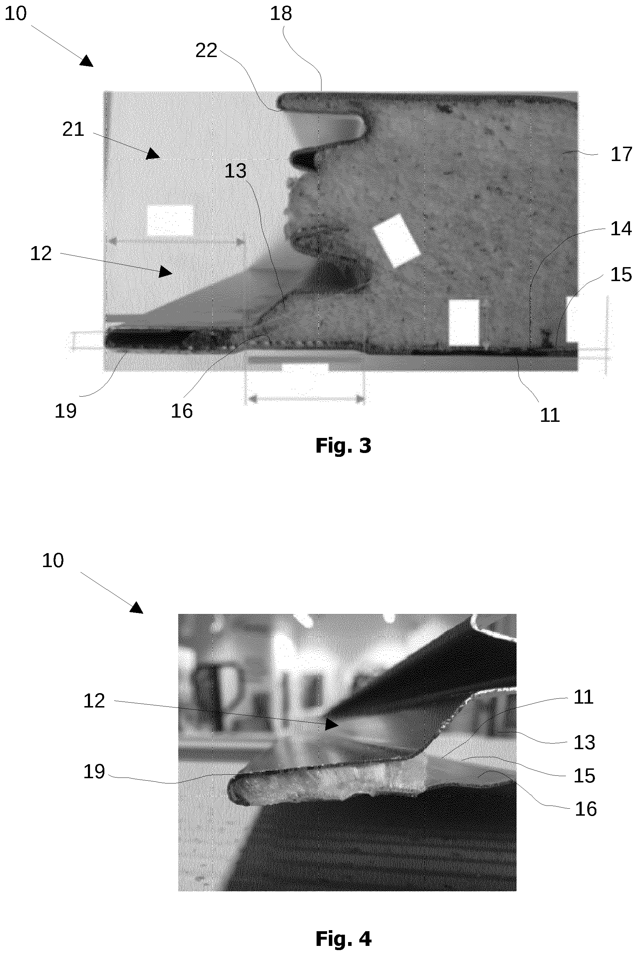

Das herzustellende Sandwichpaneel 10 umfasst eine erste Deckschicht 11, eine der ersten Deckschicht 11 gegenüberliegende zweite Deckschicht 18 und eine zwischen den beiden Deckschichten 11, 18 ausgebildete Kernschicht 17. Dies ist beispielsweise in der Fig. 3 gut zu erkennen.

Die beiden Deckschichten 11, 18 sind bei dem vorliegenden Ausführungsbeispiel aus Metall, genauer aus Aluminium. Andere Materialien, wie zum Beispiel, Kunststoff ist möglich. Die Deckschichten 11, 18 sind, wie in Fig. 3 zu erkennen, aus einem Blechmaterial gebildet. Die Deckschichten 11, 18 sind in deren Randbereichen gebogen, sodass diese integral ausgebildete Profilränder 12, 22 aufweisen.

Ferner weist das Sandwichpaneel 10 eine längsseitig verlaufende Verbindungsstelle 21 auf, an der die Profilränder 12, 22 der ersten und zweiten Deckschicht 11, 18 ausgebildet sind. Die beiden Profilränder 12, 22 unterscheiden sich in deren Form. Der Profilrand 12 der ersten Deckschicht 11 umfasst einen Hinterschnitt 13 mit einer Hinterschnittfläche 16, die an eine Innenfläche 15 der ersten Deckschicht 11 angrenzt. Die Innenfläche 15 ist großflächiger als die Hinterschnittfläche 16. Die Hinterschnittfläche 16 geht in die Innenfläche 15 der ersten Deckschicht 11 direkt über. Der Hinterschnitt 13 ist daher zur Innenfläche 15 hin offen ausgebildet. Anders gesagt, ist der Hinterschnitt 13 zur Mitte der ersten Deckschicht 11 hin offen. Der Hinterschnitt 13 bildet einen entlang der ersten Deckschicht 11 verlaufenden Schlitz.

Wie in Fig. 3 gezeigt ist, mündet der Hinterschnitt 13 in einen Schmalbereich 19 des Profilrandes 12. Der Schmalbereich 19 ist ein flacher Kanal, der einerseits zum Hinterschnitt 13 offen ist und andererseits auf der dem Hinterschnitt 13 gegenüberliegenden Seite geschlossen ist. Der flache Kanal verläuft parallel mit dem Hinterschnitt 13 entlang der ersten Deckschicht 11. Der Schmalbereich 19 weist eine Dicke auf, die kleiner als eine Dicke des Hinterschnitts 13 ist. Konkret verjüngt sich der Hinterschnitt 13 zu dem Schmalbereich 19 hin.

Das Sandwichpaneel 10 kommt bevorzugt an Gebäuden, bspw. zur Bildung einer Fassade, bzw. bei thermisch isolierten Aufbauten, insbesondere Fahrzeugaufbauten, zur Bildung der Wände, Decken, Böden oder Türen zum Einsatz.

Um eine besonders starke Haftverbindung der Kernschicht 17 an der ersten Deckschicht 11 zu erhalten, ist die erste Deckschicht 11 mit der Kernschicht 17 zusätzlich verklebt. Dies hat den Vorteil, dass die erste Deckschicht 11 besonders gut an der Kernschicht 17 haftet, sodass einem Ablösen der Deckschicht 11 vorgebeugt ist. Das Risiko der Blasenbildung ist damit reduziert. Die erste Deckschicht 11 ist vorzugsweise im verbauten Zustand der Außenumgebung zugewandt angeordnet, sodass das Sandwichpaneel 10 erhöhte Widerstandsfähigkeit gegenüber äußeren Umwelteinflüssen, wie beispielsweise Sonnenstrahlung, Regen, etc. aufweist. Besonders ist das Sandwichpaneel dadurch resistenter gegenüber thermischen Schocks, die sich aus starken Temperaturschwankungen ergeben.

Die Vorrichtung 100 gemäß Fig. 1 umfasst eine erste Zuführ- und Transporteinrichtung 104, die in einer Längsrichtung LR der Vorrichtung 100 verläuft. Die erste Zuführ- und Transporteinrichtung 104 ist dazu angepasst, die erste Deckschicht 11 des Sandwichpaneels 10 zu bewegen. In Fig. 1 ist zu sehen, dass die Zuführ- und Transporteinrichtung 104 eine Rollenbahn bildet, die die erste Deckschicht 11 in Längsrichtung LR der Vorrichtung 100 bewegen. Eine andere Ausgestaltung der Zuführ- und Transporteinrichtung 104 ist möglich. Die Längsrichtung LR entspricht einer Zuführrichtung ZR der Zuführ- und Transporteinrichtung 104.

Ferner geht aus der Fig. 1 hervor, dass die Vorrichtung 100 eine Klebstoffaufbringeinrichtung 101 zur großflächigen Klebstoffaufbringung aufweist. Die Klebstoffaufbringeinrichtung 101 ist dazu angepasst, einen nicht-reaktiven Klebstoff 14 auf die Innenfläche 15 der ersten Deckschicht 11 des Sandwichpaneels 10 aufzubringen, wobei die Zuführ- und Transporteinrichtung 104 unterhalb der Klebstoffaufbringeinrichtung 101 in Längsrichtung LR der Vorrichtung 100 verläuft. Die Klebstoffaufbringeinrichtung 101 überspannt die gesamte Breite B der Innenfläche 15 der ersten Deckschicht 11.

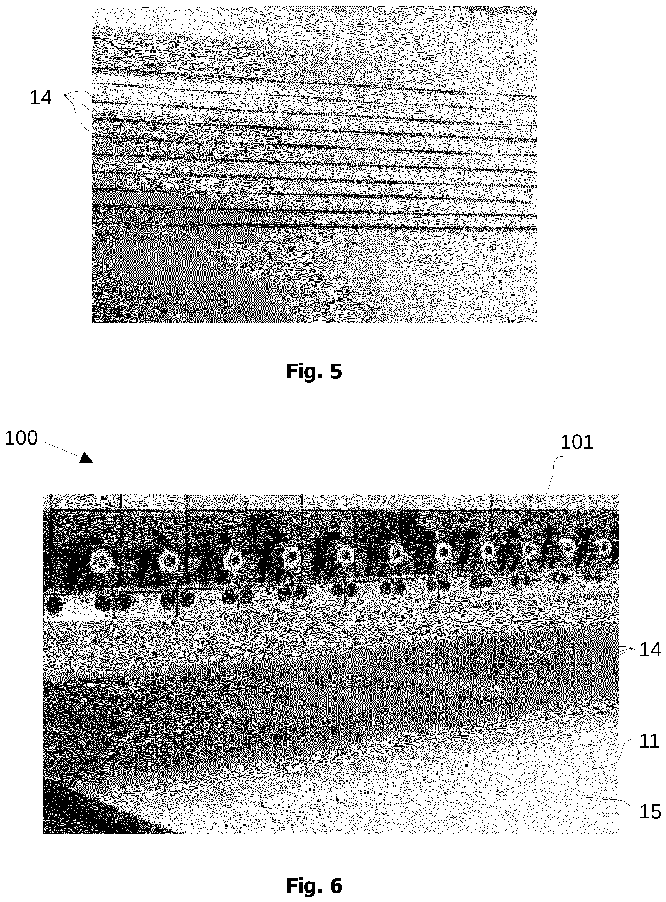

Die Klebstoffaufbringeinrichtung 101 weist, wie in Fig. 6 gezeigt, eine Vielzahl von Öffnungen auf, durch die der nicht-reaktive Klebstoff 14 fadenförmig auf die Innenfläche 15 der ersten Deckschicht 11 aufgebracht wird. Bevorzugt wird der nicht-reaktive Klebstoff 14 auf die Innenfläche 15 der ersten Deckschicht 11 raupenförmig aufgetragen. Wesentlich ist aber, dass der nicht-reaktive Klebstoff 14 über die gesamte Breite der Innenfläche 15 in gleichmäßig beabstandeten Klebstoffbahnen aufgetragen wird, um eine vergrößerte Haftoberfläche zu realisieren.

Gemäß der schematischen Darstellung der Vorrichtung 100 in Fig. 2 umfasst die Vorrichtung 100 des Weiteren eine seitlich abstehende Düse 102, die im Wesentlichen quer zur Längsrichtung LR bzw. Zuführrichtung ZR ausgerichtet ist. Die seitlich abstehende Düse 102 ist dazu angepasst, den nicht-reaktiven Klebstoff 14 auf die an die Innenfläche 15 der ersten Deckschicht 11 angrenzende Hinterschnittfläche 16 des Profilrandes 12 der ersten Deckschicht 11 aufzubringen. Auf die seitlich abstehende Düse 102 wird später näher eingegangen.

Gemäß Fig. 2 weist die Vorrichtung 100 ferner eine weitere Düse 103 auf, die der seitlich abstehenden Düse 102 vorgeschaltet ist. Die weitere Düse 103 dient dazu, den Schmalbereich 19 des Profilrandes 12 der ersten Deckschicht 11 auszufüllen. Dazu wird der nicht-reaktive Klebstoff in den Schmalbereich 19 durch die weitere Düse 103 eingebracht. Der in den Schmalbereich 19 eingebrachte nicht-reaktive Klebstoff 14 wird vorzugsweise geschäumt bzw. ist schäumbar, insbesondere selbstschäumbar. Der auf die Hinterschnittfläche 16 aufgetragene und der in den Schmalbereich 19 gefüllte nicht-reaktive Klebstoff 14 derselbe. Der Schmalbereich 19 im ausgefüllten, insbesondere ausgeschäumten Zustand, ist bspw. in Fig. 4 exemplarisch gezeigt. Alternativ kann in den Schmalbereich 19 eine vorgefertigte Dichtung eingepresst werden. Dies erfolgt vorzugsweise durch ein Einpressrad. Andere Einbringvorrichtungen für die Dichtung sind möglich.

Aus Fig. 2 geht ebenso hervor, dass die weitere Düse 103 der seitlich abstehenden Düse 104 vorgeschaltet ist. Ebenso ist die seitlich abstehende Düse 102 der Klebstoffaufbringeinrichtung 101 vorgeschaltet. Die Düsen 102, 103 sind quer zur Zuführrichtung ZR ausgerichtet. Die Düsen 102, 103 sind in der Fig. 1 nicht dargestellt.

Gemäß Fig. 1 und 2 ist ersichtlich, dass der Klebstoffaufbringeinrichtung 101 eine Einrichtung 105 zum Auftragen eines selbstexpandierenden Kunststoffmaterials 17 nachgeordnet ist. Die Einrichtung 105 erstreckt sich über die gesamte Breite B der Innenfläche 15 der ersten Deckschicht 11. Bei dem selbstexpandierenden Kunststoffmaterial 17 handelt es sich um eine selbstständig aufschäumende Masse, die im aufgeschäumten Zustand die Kernschicht 17 bildet. Die Kernschicht 17 kann daher auch als Schaumkern bezeichnet werden.

In Fig. 1 der Einfachheit halber nicht dargestellt ist eine zweite Zuführ- und Transporteinrichtung 104 der Vorrichtung 100, die während der Paneelherstellung die zweite Deckschicht 18 oberhalb der ersten Deckschicht 11 und von dieser vertikal beabstandet parallel führt. Vorzugsweise erfolgt dies in Zuführrichtung ZR erste nach der Einrichtung 105 zum Auftragen der Kernschichtmasse.

Aus Fig. 2 geht hervor, dass die seitlich abstehende Düse 102 beim Einbringen des nicht-reaktiven Klebstoffs 14 in den Hinterschnitt 13 quer zur Längsrichtung LR über die Klebstoffaufbringeinrichtung 101 seitlich vorsteht. Die an der Stelle der Düsen 102, 103 gezeichneten Pfeile in Fig. 2 stellen die Aufbringrichtung des Klebstoffs 14 auf die Hinterschnittfläche 16 bzw. des schäumenden Materials in den Schmalbereich 19 dar. Die Düsen 102, 103 sowie die Klebstoffaufbringeinrichtung 101 sind feststehend.

Im Folgenden wird die Herstellung des vorstehend genannten Sandwichpaneels 10 anhand eines Verfahrens beschrieben, das mit der Vorrichtung 100 durchgeführt wird.

In einem ersten Verfahrensschritt wird die erste Deckschicht 11 des Sandwichpaneels 10 durch die erste Zuführ- und Transporteinrichtung 104 der Klebstoffaufbringeinrichtung 101, der seitlich abstehenden Düse 102 und der weiteren Düse 103 zugeführt, wobei die erste Deckschicht 11 während der folgenden Schritte in Längsrichtung LR der Vorrichtung 100 bewegt wird.

In Zuführrichtung ZR füllt zuerst die weitere Düse 103 den Schmalbereich 19 des Profilrandes 12 der ersten Deckschicht 11 mit dem nicht-reaktiven Klebstoff 14, der geschäumt wird oder selbständig aufschäumt, aus. Anschließend trägt die seitlich abstehende Düse 102 den nicht-reaktiven Klebstoff 14 derart auf die Hinterschnittfläche 16 auf, dass der Klebstoff 14 in Zuführrichtung ZR nebeneinander verlaufenden Raupen auf der Hinterschnittfläche 16 zu liegen kommt. Dies ist bspw. in Fig. 5 exemplarisch gezeigt. Danach trägt die Klebstoffaufbringeinrichtung 101 den nicht-reaktiven Klebstoff 14 auf die an den Hinterschnitt 13 angrenzende Innenfläche 15 der ersten Deckschicht 11 auf. Dies erfolgt über die gesamte Breite der Innenfläche 15, wobei voneinander regelmäßig beabstandete Klebstoffraupen auf die Innenfläche 15 aufgetragen werden. Zumindest die Klebstoffaufbringeinrichtung 101 und die seitlich abstehende Düse 102 nutzen dabei dieselbe Klebstoffversorgung, d.h. Pumpe, Klebstofftank, Steuerung etc.

Es ist möglich, dass die Düsen 102, 103 in Bezug auf die Klebstoffaufbringeinrichtung 101 anders angeordnet sind. Bspw. können die Düsen 102, 103 der Klebstoffaufbringeinrichtung 101 nachgeschaltet sein.

Nachdem der Auftrag von nicht-reaktivem Klebstoff 14 auf die Innenfläche 15 und die Hinterschnittfläche 16 erfolgte, wird die erste Deckschicht 11 der Einrichtung 105 zugeführt, die eine selbstständig aufschäumende Kunststoffmasse zumindest auf die Innenfläche 15 der ersten Deckschicht 11 aufträgt. Anschließend wird die zweite Deckschicht 18 durch die zweite Zuführ- und Transporteinrichtung 104 derart geführt, dass sie von der Innenfläche 15 der ersten Deckschicht 11 gegenüberliegt und von der Innenfläche 15 einen Abstand aufweist. Die beiden Deckschichten 11, 18 werden dann parallel geführt bzw. bewegt, wobei die aufgetragene Kunststoffmasse aufschäumt und den Zwischenraum zwischen den Deckschichten 11, 18 ausfüllt. Dabei expandiert die Kunststoffmasse auch in den Hinterschnitt 13 und tritt neben dem Klebstoff 14 auf der Innenfläche 15 aus mit dem Klebstoff 14 auf der Hinterschnittfläche 16 in Kontakt. Nach einem Aushärten der Kunststoffmasse ist eine feste Kernschicht gebildet. Bevorzugt bildet diese einen Schaumkern.

Bei dem nicht-reaktivem Klebstoff 14 handelt es sich um einen Schmelzklebstoff, der nach dem allgemein bekannten Hotmelt-Verfahren auf die Innenfläche 15 bzw. die Hinterschnittfläche 16 aufgetragen wird. Der Schmelzklebstoff umfasst
- als ersten Bestandteil mindestens ein Styrol-Blockcopolymer SC, insbesondere mit einem Anteil von mindestens 5 Gew.-%, vorzugsweise mindestens 15 Gew.-%, weiter bevorzugt mindestens 20 Gew.-%. Der erste Bestandteil des Styrol-Blockcopolymers SC kann bspw. 5 - 45 Gew.-%, vorzugsweise 15 - 45 Gew.-%, weiter bevorzugt 20 - 40 Gew.-%, des Gesamtgewichts des Schmelzklebstoffs ausmachen;
- als zweiten Bestandteil mindestens ein klebrigmachendes Harz TR, insbesondere mit einem Anteil von 15 - 55 Gew.-%, bevorzugt 20 - 50 Gew.-%; und
- mindestens einen Weichmacher PL, ausgewählt aus Prozessölen und flüssigen Polyolefinharzen.

Die Verwendung eines solchen nicht-reaktiven Schmelzklebstoffs hat den großen Vorteil, dass eine besonders hochfeste Verbindung zwischen der Kernschicht und der Innenfläche 15 bzw. der Hinterschnittfläche 16 der ersten Deckschicht 11 gebildet wird und im Gebrauch das Risiko einer Blasenbildung maßgeblich reduziert ist.

### Bezugszeichenliste

- 10: Sandwichpaneel
- 11: erste Deckschicht
- 12: Profilrand
- 13: Hinterschnitt
- 14: nicht-reaktiver Klebstoff
- 15: Innenfläche der ersten Deckschicht
- 16: Hinterschnittfläche
- 17: Kunststoffmaterial, Kernschicht
- 18: zweite Deckschicht
- 19: Schmalbereich
- 21: Verbindungsstelle
- 22: Profilrand der zweiten Deckschicht
- 100: Vorrichtung zur Herstellung eines Sandwichpaneels
- 101: Klebstoffaufbringeinrichtung
- 102: seitlich abstehende Düse
- 103: weitere Düse
- 104: erste Zuführ- und Transporteinrichtung
- 105: nachgeschaltete Einrichtung
- RZ: Zuführrichtung
- LR: Längsrichtung der Vorrichtung
- B: Breite der Innenfläche der ersten Deckschicht

## Patentansprüche

1. Verfahren zur Herstellung eines Sandwichpaneels (10), insbesondere für Gebäude und/oder den Gütertransport, bei dem
- eine erste Deckschicht (11) des Sandwichpaneels (10) wenigstens einer Klebstoffaufbringeinrichtung (101) zur großflächigen Klebstoffaufbringung zugeführt wird, wobei die erste Deckschicht (11) einen in Zuführrichtung (ZR) verlaufenden Profilrand (12) mit wenigstens einem Hinterschnitt (13) aufweist;
- ein nicht-reaktiver Klebstoff (14) durch die Klebstoffaufbringeinrichtung (101) auf eine, insbesondere großflächige, Innenfläche (15) der ersten Deckschicht (11) aufgebracht wird; und
- der nicht-reaktive Klebstoff (14) durch wenigstens eine seitlich abstehende Düse (102) auf wenigstens eine an die Innenfläche (15) der ersten Deckschicht (11) angrenzende Hinterschnittfläche (16) des Profilrandes aufgebracht wird, wobei die Düse (102) zumindest teilweise in den Hinterschnitt (13) ragt;
- auf den aufgebrachten nicht-reaktiven Klebstoff (14) wenigstens ein selbstexpandierendes Kunststoffmaterial (17), insbesondere eine schäumende Masse, aufgetragen wird;
- eine zweite Deckschicht (18) des Sandwichpaneels (10) von der ersten Deckschicht (11) derart beabstandet gegenüberliegend geführt wird, dass durch Expandieren des aufgetragenen Kunststoffmaterials (17) die beiden Deckschichten (11, 18) zur Bildung des Sandwichpaneels (10) miteinander verbunden werden.

2. Verfahren nach Anspruch 1,
**dadurch gekennzeichnet, dass**
der nicht-reaktive Klebstoff (14) in Zuführrichtung (RZ) vor- und/oder nach der Klebstoffaufbringeinrichtung (101) auf die Hinterschnittfläche (16) aufgebracht wird.

3. Verfahren nach Anspruch 1 oder 2,
**dadurch gekennzeichnet, dass**
beim Auftragen des nicht-reaktiven Klebstoffs auf die Innenfläche (15) der ersten Deckschicht (11) die Klebstoffaufbringeinrichtung (101) und/oder beim Auftragen des nicht-reaktiven Klebstoffs auf die Hinterschnittfläche (16) des Profilrandes (12) stillsteht, insbesondere feststeht, wobei die erste Deckschicht (11) in Zuführrichtung (ZR), insbesondere fortbewegend, verläuft.

4. Verfahren nach einem der vorhergehenden Ansprüche,
**dadurch gekennzeichnet, dass**
der nicht-reaktive Klebstoff (14) auf die Innenfläche (15) der ersten Deckschicht (11) und/oder auf die Hinterschnittfläche (16) des Profilrandes (12) mehrlinienförmig und/oder raupenförmig aufgetragen wird.

5. Verfahren nach einem der vorhergehenden Ansprüche,
**dadurch gekennzeichnet, dass**
der Profilrand (12) wenigstens einen an die Hinterschnittfläche (16) angrenzenden Schmalbereich (19) umfasst, der durch die seitlich abstehende Düse (102) und/oder eine weitere, insbesondere seitlich abstehende, Düse (103) mit dem nicht-reaktiven Klebstoff (14) zumindest abschnittsweise ausgefüllt wird.

6. Verfahren nach einem der vorhergehenden Ansprüche,
**dadurch gekennzeichnet, dass**
die Klebstoffaufbringeinrichtung (101) und die seitlich abstehende Düse (102) ein und dieselbe Klebstoffversorgung nutzen.

7. Verfahren nach einem der vorhergehenden Ansprüche,
**dadurch gekennzeichnet, dass**
auf die Innenfläche (15) der ersten Deckschicht (11) und/oder auf die Hinterschnittfläche (16) des Profilrandes (12) ausschließlich nicht-reaktiver Klebstoff (14) aufgetragen wird.

8. Verfahren nach einem der vorhergehenden Ansprüche,
**dadurch gekennzeichnet, dass**
als nicht-reaktiver Klebstoff (14) wenigstens ein Schmelzklebstoff verwendet wird, der insbesondere nach dem Hotmelt-Verfahren, aufgetragen wird.

9. Verfahren nach Anspruch 8,
**dadurch gekennzeichnet, dass**
der Schmelzklebstoff umfasst:
a. als ersten Bestandteil mindestens ein Styrol-Blockcopolymer SC, insbesondere mit einem Anteil von mindestens 5 Gew.-%, vorzugsweise mindestens 20 Gew.-%;
b. als zweiten Bestandteil mindestens ein klebrigmachendes Kohlenwasserstoffharz TR, insbesondere mit einem Anteil von 15 - 55 Gew.-%, bevorzugt 20 - 50 Gew.-%,
c. mindestens einen Weichmacher PL, ausgewählt aus Prozessölen und flüssigen Kohlenwasserstoffharzen, insbesondere in Form von Polyolefinharzen.

10. Vorrichtung (100) zur Herstellung eines Sandwichpaneels (10), insbesondere für Gebäude und/oder den Gütertransport, umfassend:
- wenigstens eine erste Zuführ- und Transporteinrichtung (104), die in einer Längsrichtung (LR) der Vorrichtung (100) verläuft und dazu angepasst ist, eine erste Deckschicht (11) des Sandwichpaneels (10) zuzuführen und zu transportieren;
- wenigstens eine Klebstoffaufbringeinrichtung (101) zur großflächigen Klebstoffaufbringung, die dazu angepasst ist, einen nicht-reaktiven Klebstoff, insbesondere Schmelzklebstoff, auf die Innenfläche (15) der ersten Deckschicht (11) des Sandwichpaneels (10) aufzubringen, wobei die Zuführ- und Transporteinrichtung (104) unterhalb der Klebstoffaufbringeinrichtung (101) in Längsrichtung (LR) der Vorrichtung (100) verläuft;
- wenigstens eine seitlich abstehende Düse (102), die im Wesentlichen quer zur Längsrichtung (LR) der Vorrichtung (100) verlaufend ausgerichtet ist und dazu angepasst ist, den nicht-reaktiven Klebstoff (14) auf wenigstens eine an die Innenfläche (15) der ersten Deckschicht (11) angrenzende Hinterschnittfläche (16) eines Profilrandes (12) der ersten Deckschicht (11) aufzubringen;
- wenigstens eine nachgeschaltete Einrichtung (105) zum Auftragen eines selbstexpandierenden Kunststoffmaterials (17), insbesondere einer schäumenden Masse;
- wenigstens eine zweite Zuführ- und Transporteinrichtung (104), die dazu angepasst ist, eine zweite Deckschicht (18) des Sandwichpaneels (10) von der ersten Deckschicht (11) beabstandet gegenüberliegend derart zuführen, dass sich durch Expandieren des aufgetragenen Kunststoffmaterials (17) die beiden Deckschichten (11, 18) zur Bildung des Sandwichpaneels (10) miteinander verbinden.

11. Vorrichtung (100) nach Anspruch 10,
**dadurch gekennzeichnet, dass**
die wenigstens eine seitlich abstehende Düse (102) quer zur Längsrichtung (LR) über die Klebstoffaufbringeinrichtung (101) seitlich vorsteht.

12. Vorrichtung (100) nach Anspruch 10 oder 11,
**dadurch gekennzeichnet, dass**
die seitlich abstehende Düse (102) wenigstens eine stirnseitige Düsenöffnung zum Ausfüllen eines an die Hinterschnittfläche (16) angrenzenden Schmalbereichs (19) des Profilrandes (12) umfasst und/oder wenigstens eine unterseitige Düsenöffnung, insbesondere mehrere solche Düsenöffnungen, zum mehrlinienförmigen Auftragen des nicht-reaktiven Klebstoffs auf die Hinterschnittfläche (16) umfasst.

13. Vorrichtung (100) nach einem der Ansprüche 10 bis 12,
**dadurch gekennzeichnet, dass**
wenigstens eine weitere Düse (103) der seitlich abstehenden Düse (102) vorgeschaltet ist, die dazu angepasst ist, einen an die Hinterschnittfläche (16) angrenzenden Schmalbereich (19) des Profilrandes (12) mit dem nicht-reaktiven Klebstoff (14) zumindest abschnittsweise auszufüllen.

14. Vorrichtung (100) nach einem der Ansprüche 10 bis 13,
**dadurch gekennzeichnet, dass**
sich die Klebstoffaufbringeinrichtung (101) und/oder die Einrichtung (105) zum Auftragen eines selbstexpandierenden Kunststoffmaterials (17) quer zur Längsrichtung (LR) der Vorrichtung (100), insbesondere über die gesamte Breite (B) der Innenfläche (15) der ersten Deckschicht (11), erstrecken.

15. Sandwichpaneel (10) für ein Gebäude und/oder den Gütertransport, mit einer ersten und einer zweiten Deckschicht (18), die einander beabstandet gegenüber angeordnet sind und einen dazwischenliegenden Zwischenraum begrenzen, der durch einen Schaumkern ausgefüllt ist, **dadurch gekennzeichnet, dass**
auf einer Innenfläche (15) der ersten Deckschicht (11) und auf einer an die Innenfläche (15) angrenzende Hinterschnittfläche (16) eines Profilrandes (12) der ersten Deckschicht (11) wenigstens ein nicht-reaktiver Klebstoff, insbesondere Schmelzklebstoff, aufgetragen ist, der den Schaumkern mit der ersten Deckschicht (11) stoffschlüssig verbindet.

16. Sandwichpaneel (10) nach Anspruch 15,
**dadurch gekennzeichnet, dass**
die beiden Deckschichten (11, 18) aus Metall, insbesondere aus beschichteten und unbeschichteten metallischen und nichtmetallischen Werkstoffen, gebildet sind.

17. Sandwichpaneel (10) nach Anspruch 15 oder 16,
**dadurch gekennzeichnet, dass**
das Sandwichpaneel (10) durch ein Verfahren nach Anspruch 1 und/oder mit einer Vorrichtung (100) nach Anspruch 10 hergestellt ist.
